# EUROPEAN PATENT SPECIFICATION

(11) **EP 3 449 166 B1**
(45) Date of publication and mention of the grant of the patent: **07.06.2023**
(21) Application number: 17720109.2
(22) Date of filing: 27.04.2017
(51) Int. Cl.: F16L 55/134, F16K 7/10, A47K 11/10, E03D 9/00, G01L 19/00

(54) **PIPE PLUG FOR BLOCKING LIQUID FLOW IN A PIPELINE**
ROHRSTOPFEN ZUR BLOCKIERUNG DES FLÜSSIGKEITSDURCHFLUSSES IN EINER ROHRLEITUNG
BOUCHON DE TUYAU POUR BLOQUER UN ÉCOULEMENT DE LIQUIDE DANS UNE CANALISATION

(30) Priority: 27.04.2016 DK 201670260
(43) Date of publication of application: 06.03.2019
(73) Proprietor: Smartwatch Invest ApS, 2840 Holte (DK)
(72) Inventor: THYKJÆR, Trygve, 2840 Holte (DK)
(74) Representative: Høiberg P/S
(86) International application number: PCT/EP2017/060021
(87) International publication number: WO 2017/186833

(56) References cited:
- WO-A1-2010/102624
- US-A- 3 459 230
- US-A- 5 894 863
- US-A1- 2004 124 589

## Description

### Field of invention

The present invention relates to a pipe plug for blocking liquid flow in a pipeline, such as an inlet or outlet pipeline. More specifically, the presently disclosed pipe plug is able to prevent overflow from a discharge / drainage pipe, e.g. a toilet, for example due to heavy rain such as cloudbursts.

### Background of invention

In recent years there has been an increase in severe cloudbursts, leading to streets and basements being flooded. Flooding leads in some instances to toilets and drainage pipes being filled by water, thereby causing overflow with contaminated water in for example basements. Toilets are being filled by water due to being connected to sewer tubes, meaning that the water is coming from the sewer tubes. This is not a nice situation for any household and leaves hours of cleaning. In severe instances, the toilet overflow also gives rise to water damages, not only near the toilet, but also further away from the toilet, in particular in all the areas where water is able to pass. Clearly, such situations are not desirable, and definitely worth avoiding. Consequently, there is a need for a device to block a sewer tube.

To date, there exist some solutions to this problem. For example US 300,636 discloses an apparatus comprising a hollow air-tight collapsible ball attached to the end of a rubber pipe, the apparatus being adapted to be inserted in the outlet of a water trap whereby the water trap can be closed by inflating the ball with an air-pump. Also WO 2010/102624, 3,459,230, US 2004/124589 and US 5,894,863 disclose pipe plugs.

### Summary of invention

The present invention is defined in the independent claim. Preferred features are defined in the dependent claims. The present disclosure relates to a pipe plug for blocking liquid flow in a pipeline, comprising: an inflatable unit for insertion into the pipeline; a pump unit configured for inflating the inflatable unit; a connecting member for connecting the inflatable unit and the pump unit. I.e. the present disclosure relates to an inflatable pipe plug. The invention comprises a pressure sensing unit for indicating the air pressure in the inflatable unit. A pressure sensing unit addresses the problem of how to determine the pressure of the inflatable unit that is typically hidden inside the tube. The pipe plug preferably comprises at least one valve,

preferably located near the pump, for releasing air in the inflatable unit. The pump unit together with the valve(s) can thereby control the pressure in the inflatable unit.

The plug can be arranged such that the inflatable unit is placed in a first opening of a pipeline, such as a discharge / drainage pipe or the S-bended pipe of a toilet. Hereafter the inflatable unit can be inflated by means of the pump unit in order to block the pipeline. The pressure in the inflatable unit can be assessed by means of the pressure sensing unit. As it is important that the presently disclosed pipe plug is inflated to a point where the liquid is completely blocked in the pipeline, the presently disclosed pipe plug provides a great advantage by comprising a pressure sensing unit for indicating the pressure in the inflatable unit.

In a preferred embodiment, the inflatable unit is able to be pumped up to 100 times, such as between 10 and 90 times, such as between 20 and 80 times, such as between 30 and 70 times, such as between 40 and 50 times, before the internal pressure in the inflatable unit, or the size thereof, is as desired.

Examples of pressure sensing units that can be used are pressure gauges, like a manometer, which can be analog or digital. However, a more low cost solution is a pressure sensing unit according to the invention where the pressure can be sensed merely by pressing the unit as it is the case of a pilot balloon. An advantage of such a solution according to the invention is that it is low cost and provides a device where the pressure can be assessed in a very easy manner.

The inflatable unit is configured to provide a liquid tight seal, such that water, for example coming from the sewer, is not able to pass the inflatable unit when installed and inflated in the pipeline. In other words, after the inflatable unit has been inflated, the inflatable unit is able to withstand an outer pressure from water in the pipe, for example coming from an overflown sewer. The inflatable unit may therefore be manufactured in an elastomeric material, such as rubber, in order to be strong, soft and elastic.

The first opening or a part thereof may comprise a container, such as a toilet bowl but can be any container having an opening which is suitable for being blocked by the inflatable unit.

The presently disclosed pipe plug may also be configured and used for blocking the fluid flow, such as gas flow, in a pipeline.

The presently disclosed pipe plug is configured to at least block the liquid flow in a pipeline and can as such be used for various applications. As stated above one application is to prevent overflowing, i.e. blocking sewage water flowing backwards in the drainage tubes after heavy rain. Another application is as a cleaning device. The presently disclosed pipe plug may be used for cleaning a container having at least a first opening. The pipe plug may be used as cleaning device by arranging the inflatable unit in the first opening, such as an S-bend of a toilet; expanding the inflatable unit in order to seal the first opening; applying a cleaning process to the container; contracting the inflatable unit, and removing the inflatable unit from the first opening. The container is preferably a toilet bowl but can be any container having an opening which is adapted to be closed by the inflatable unit. This is also disclosed in more detail in WO 2010/102624.

In one embodiment, the cleaning process comprises a step wherein the container is filled with a cleaning agent which may comprise cleaning tablets or a solution of acetic acid. Cleaning of a toilet is thereby easily accomplished. The time needed by the operator is short since the operator only needs to position the inflatable unit in the toilet drain and fill the toilet bowl with the cleaning agent, an operation which may take less than 5 minutes for the experienced user. Afterwards, the cleaning agent is active for a period which is defined by the operator and which may depend on the amount and character of the dirt and impurity in the toilet bowl.

### Description of drawings

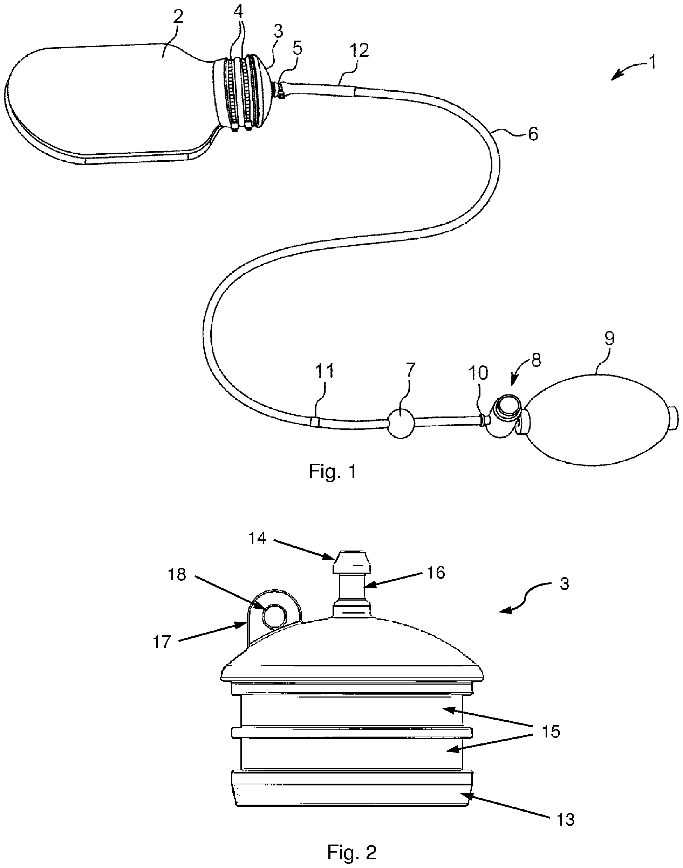

**Fig. 1** shows an embodiment of the pipe plug **1** according to the present invention. The pipe plug **1** has an inflatable unit **2** for insertion into a pipeline. A pump unit **9** is configured for inflating the inflatable unit **2** by manual operation. A connecting member in the form of the hose **6** is provided for connecting the inflatable unit **2** and the pump unit **9.** The pipe plug **1** also comprises a pressure sensing unit **7** for indicating the air pressure in the inflatable unit. In this invention, the pressure sensing unit **7** is a pilot balloon, here shown in a spherical form. The pressure sensing unit **7** is directly connected to the hose **6,** in close vicinity to the pump unit **9,** so as to allow for easy handling of pumping and pressure sensing. The pipe plug further has a valve unit **8,** here a three-port valve connected to the inflatable unit **2,** and for contracting the inflatable unit **2.** The hose **6** is connected to the valve unit **8** using a clamp **10,** such that the clamp **10** is tied is around the hose **6** and a part of the valve unit **8.** A coupling **3** is connecting the inflatable unit **2** with the hose **6.** The coupling **3** has a wide tube part connected to the inflatable unit **2,** and a narrow tube part connected to the hose **6.** A clamp **5** is tied around the hose **6** and the narrow tube part. The wide tube part of the coupling **3** is fastened to the inflatable unit **2** using two clamps **4.** A movable length indicator **11** is provided around the hose **6.** The movable length indicator **11** is translatable along the hose such that a user can determine how far the inflatable unit **2** is inside a pipeline when installed in said pipeline. More the one length indicator **11** can be provided on the hose **6.** A fixed length indicator **12** is provided on the hose **6** fixed to the coupling **3** such that it is abutting the inflatable unit **2.** The fixed length indicator **12** is formed as a second tube member overlying the hose **6** and can be used to determine the position of the inflatable unit **2** when installed in a pipeline, such as the s-shaped drain of a toilet, where the inflatable unit **2** itself is invisible once installed, but where the fixed length indicator **12** then provides an indication of the position of the inflatable unit **2** inside the pipeline.

**Fig. 2** shows an embodiment of the coupling **3** with the wide tube part **13** at the bottom of the figure and the narrow tube part **14** at the top of the figure. The wide tube part **13** has two indentations in the form of grooves **15** for fastening the inflatable unit **2** to the coupling **3** using clamps. Similarly, the narrow tube part **14** has an indentation in the form of groove **16** for fastening the hose **6** to the coupling **3** using a clamp. In some embodiments the indentations in the narrow tube part **14** and/or wide tube part **13** may furthermore have one or more layers of rubber, like a rubber ring, in order to create a better seal to the connecting member and/or the inflatable unit **2.** An attachment element 17 in the form of a flat piece of material extends from the top of the coupling **3** with a hole **18** through the material. A string may be tied to the coupling **3** through the hole **18** such that the pipe plug 1 may be released from the pipe after use by pulling the string.

### Detailed description of the invention

In the following, several features and embodiments of the plug are described in further detail.

### Pressure sensing unit

In one embodiment of the present invention, the pressure sensing unit comprises a compressible unit. The pressure sensing unit comprises an air filled compressible unit fluidly connected to the inflatable unit, the pipe plug configured such that the air pressure in the inflatable unit is indicated by the air pressure in the compressible unit, e.g. such that the pressure in the compressible unit is substantially proportional to the air pressure in the inflatable unit. The air pressure is indicated visually by means of a pilot balloon that inflates along with inflation of the inflatable unit. The air pressure may additionally be assessed non-visually, for example in a balloon that maintains its volume during inflation of the inflatable unit. In this way, the air pressure may be assessed by feeling the pressure of the pilot balloon, for example by pressing with fingers on the balloon.

In the present invention, the pressure sensing unit is a pilot balloon. A pilot balloon is a guide balloon, meaning that it acts as a guide to the pressure in the inflatable unit. By the feel of the pilot balloon, a user of the pipe plug may thereby be guided such that the user can determine the pressure in the inflatable unit. The pressure sensing unit may be capable of being squeezed by hand and/or finger(s).

In one embodiment of the present invention, the pressure sensing unit is attached directly to the connecting member. This may facilitate easy access to the compressible unit, and provide for a simple and low cost device.

In a second embodiment which is not within the scope of the claims, the pressure sensing unit is formed as a limited length of the connecting member having a larger cross sectional diameter than the rest of the connecting member. Such a solution may also provide for a simple and low cost device.

The pressure sensing unit is inflatable. In this way, the pressure may for example be indicated visually. The pressure may be indicated directly by the compressible unit being inflatable, or indirectly, for example by pressing upon a mechanical unit that is configured for providing a qualitative measure of the pressure.

In other embodiments, the pressure sensing unit is positioned between 1 cm and 20 cm from the pump unit, such as between 2 cm and 10 cm, such as between 3 cm and 7 cm, such as between 4 cm and 6 cm, such as 5 cm from the pump unit. An advantage of this embodiment is that the user may be able to pump up the inflatable unit and easily access the pressure sensing unit. In other words, the embodiment provides a practical device.

The pressure sensing unit may have a spherical form. In relation hereto, the pressure sensing unit may have a maximum diameter between 5 mm and 50 mm, such as between 6 mm and 40 mm, such as between 7 mm and 30 mm, and according to the invention between 8 mm and 20 mm, such as between 9 and 10 mm. These dimensions may be optimal for feeling the pressure of the pressure sensing unit with for example two fingers.

In alternative embodiments, the compressible unit has an elliptical form.

As already described, the pressure sensing unit may be configured for providing a qualitative indication of the internal pressure in the inflatable unit.

Various materials can be used to manufacture the pressure sensing unit, and in most embodiments, the compressible unit is made of latex. This material is typically low cost and provides for an optimal feel of the pressure.

As also stated previously the pressure sensing unit may be some sort of pressure gauge, e.g. a manometer. However, compared to a pilot balloon according to the invention a pressure gauge is a much more complicated and less cost efficient solution.

### Inflatable unit

According to the objective of the present invention, the inflatable unit is dimensioned to block a drainage pipe, such as a drain pipe having a diameter between 20 mm and 150 mm, such as 32 mm, 40 mm, 50 mm, 75 mm, or 110 mm.

In an embodiment which is not not according to the claims, the inflatable unit has a diameter between 20 mm and 150 mm, such as 32 mm, 40 mm, 50 mm, 75 mm, or 110 mm. Using these dimensions, may provide for optimal blocking of pipes. Many types and pipe diameters of drainage pipes and toilets exist and the inflatable unit of the presently disclosed pipe plug may come in many sizes, such that a user can select the appropriate size inflatable unit to the specific application with the specific pipeline having a specific diameter in his home / building.

In a most preferred embodiment, the pipe plug is configured to withstand an outer liquid (e.g. water) pressure of up to 0.1 bar, more preferably up to 0.2 bar, even more preferably up to 0.3 bar, yet more preferably up to 0.5 bar, yet even more preferably up to 1 bar, most preferably up to 3 bar, when installed in a pipeline and inflated by means of the pump unit. Thereby is provided a device that is able to effectively block rain burst overflow in for example toilets and drain pipes.

In various embodiments of the pipe plug, the inflatable unit comprises a reinforced portion. By such a reinforced portion, an advantage is gained in that the portion of the connection means close to the inflatable unit, and the portion of the inflatable unit close to the connection means, are prevented from developing sharp bends that may act as barriers when the inflatable unit is expanded or contracted. Further, in another embodiment, the pipe plug comprises a valve unit, such as a three-port valve, for controlling the pressure in the inflatable unit. Such a valve unit is advantageous in contracting the expandable member by pressure release.

The inflatable unit may be connected to the connecting member by means of a coupling. Compared to the inflatable unit the coupling is preferably rigid. The coupling 3 may be provided with a wide part connected to the inflatable unit 2, and a narrow tube part connected to the connecting member 6. The narrow tube part and/or the wide tube part of the coupling may be circular in cross section and they may comprise circular indentations. One or more, such as two or more, clamps may then be provided to secure the inflatable part to the wide part of the coupling and/or to secure the connecting member to the narrow part of the coupling. The combination of an inflatable unit in for example rubber or latex and a substantially rigid round coupling, for example manufactured in plastic, with indentations in the rounded edge and clamps, such as cable ties around the indentations, to secure the inflatable unit to the coupling, has turned out to be a low cost solution that is sufficiently strong and airtight to maintain the necessary pressure that the inflatable unit must be able to withstand in the pipeline.

The coupling may furthermore have one or more layers of elastomeric material, such as rubber, in at least one, or all, of the indentations in the narrow tube part and/or wide tube part. For example in the form of rings of elastomeric material located in the indentations. The elastomeric layers may help to improve the airtight seal between the coupling and the inflatable unit and/or between the coupling and the connecting member, because elastomeric material is thereby located between the coupling and the inflatable unit. The shore hardness of the elastomeric layers may substantially correspond to the shore hardness of the material of the inflatable unit.

The coupling may furthermore be equipped with at least one attachment element, for example in the form of a hole and/or hook and/or eye, configured for mounting a string, such that the pipe plug can be released after use by pulling the string instead of the connecting member. For the case of an eye in the coupling, this may be a screw eye, an eyebolt or an eye integrated as part of the coupling. In one embodiment, the attachment element may be in form of a flat piece of material extending from the coupling with a hole through the material for attaching a string. Pulling the string attached to the coupling is provided as a safer means for releasing the pipe plug from the pipe after use instead of pulling the hose, as this may become damaged or detached from the coupling.

### Connecting member

In one embodiment of the present invention, the connecting member comprises a first tube member, such as a hose. The inflatable unit may thereby easily be inflated by use of air. The tube member may be made of latex. The tube member may have a diameter between 3 mm and 50 mm, such as between 4 mm and 40 mm, such as between 5 and 20 mm. The connecting member is in most embodiments a flexible member. Thereby is provided for a device that is able to be inserted into bended pipes, for example S-shaped pipes.

In a preferred embodiment of the pipe plug, the pipe plug comprises a measuring means, preferably provided on the connecting member. The measuring means comprises a length measuring means. The measuring means can thus be a position means for positioning the inflatable unit. In a related embodiment, the measuring means comprises a length measuring means, such as a ruler having at least one length indicator. The length measuring means may preferably comprise a second tube member extending from the inflatable unit and said second tube member being adapted for engagement with the first tube member as exemplified as the fixed length indicator **12** in fig. 1. The second tube member may be shorter than the first tube member, and said second tube member may encapsulate a portion of the first tube member. Further, the second tube member may have an end portion being provided at a predetermined lengthwise position on a portion of the first tube member. The predetermined lengthwise position can be used to place the inflatable unit in a correct position, for example when used as a pipe plug or in a cleaning process. The predetermined lengthwise position is useful for instance when the pipe plug is used in a toilet. The inflatable member is thus adapted for precise arrangement in the trap of a toilet, such as a water lock of a toilet, which often is an S-shaped pipe.

### Pump unit

In one embodiment of the present invention, the pump unit is attached to the connecting member via a funnel unit, wherein the funnel unit has a wide tube part connected to the pump unit, and a narrow tube part connected to the connecting member. This embodiment provides for an effective pumping of air into the connecting member. The pump unit may be a hand operated plastic or rubber pump unit that can be operated with one hand, i.e. the inflatable unit can be inflated by the user continuously pumping the pump unit with one hand. With the other hand / fingers the user can assess the pressure in the inflatable unit that is inflated inside the pipeline.

In a second embodiment of the present invention, the wide tube part is connected to the pump unit such that a part of the pump unit is covering the wide tube part. In this way a rigid and solid connection may be provided, in particular a connection whereby it is possible to pump air into the connecting member and the inflatable member without breaking.

In a most preferred embodiment, the wide tube part is fastened to the pump unit using one or more clip(s) and/or clamp(s). Thereby is provided a device that is properly secured, in particular such that it can withstand high pressures and is able to be used many times.

### Cleaning example

The operator may choose if the water standing in a toilet has to be removed or not, to remove the water, the operator may use a toilet brush to push the water past the S-bend of the toilet. The inflatable unit, as may be a deflated balloon, is positioned in the toilet trap in such a way that a reinforced part of the tube extending from the balloon is just visible. The balloon is now inflated by use of the hand pump, which has to be pushed approximately 50 times, until it shuts the toilet drain. If acetic acid is used for cleaning, the following steps are carried out. 1 liter of acetic acid is poured into the toilet bowl followed by water from the tap with a temperature of approximately 40 - 50 °C until the toilet bowl is filled up with water. The resulting acetic acid solution is left to work on the calcareous sediments for minimum 30 min. Next, the water is emptied from the toilet bowl by deflating the balloon which is carried out by opening the pressure release valve. The operator needs to retain the balloon from getting flushed out by applying a firm grip on the reinforced part of the tube extending from the balloon or by applying a firm grip of a string attached to the coupling of the pipe plug, e.g. by means of an attachment element on the coupling. When the water has been flushed out the balloon is removed by pulling the reinforced part of the tube extending from the balloon or by pulling the string attached to the coupling. The string may be part of the pipe plug. The toilet bowl can optionally be scoured by a sponge with a cleaning agent. If tablets are used, the following steps are performed. The toilet bowl is filled with water having a temperature of approximately 40 °C whereafter the tablets (preferably 8 tablets) are added. The solution is left alone for 6 hours, for instance overnight. Next, the water is emptied from the toilet bowl in the same way as described above for the case of acetic acid as a cleaning agent.

## Claims

1. A pipe plug (1) for blocking liquid flow in a pipeline, comprising:
- an air inflatable unit (2) for insertion into the pipeline and dimensioned to block a pipeline having a diameter of between 20 mm and 150 mm;
- a pump unit (9) configured for inflating the inflatable unit (2) with air, and
- a connecting member (6) for connecting the inflatable unit (2) and the pump unit (9)
the pipe plug **characterized by** comprising a pressure sensing unit (7), in the form of a spherical or elliptical air inflatable pilot balloon having a maximum diameter of between 8 mm and 20 mm, configured for providing a qualitative indication of the internal air pressure in the inflatable unit (2), and that the pump unit (9) is configured for inflating the pressure sensing unit (7) with air.

2. The pipe plug (1) according to claim 1, wherein the pressure sensing unit (7) is attached directly to the connecting member (6), or
wherein the pressure sensing unit (7) is formed as a limited length of the connecting member (6) having a larger cross sectional diameter than the rest of the connecting member (6).

3. The pipe plug (1) according to any of the preceding claims, wherein the pressure sensing unit (7) is positioned between 1 cm and 20 cm from the pump unit (9), such as between 2 cm and 10 cm, such as between 3 cm and 7 cm, such as between 4 cm and 6 cm, such as 5 cm from the pump unit (9).

4. The pipe plug (1) according to any of the preceding claims, wherein the pressure sensing unit (7) is made of latex.

5. The pipe plug (1) according to any of the preceding claims,
wherein the inflatable unit (2) has a diameter between 20 mm and 150 mm, such as 32 mm, 40 mm, 50 mm, 75 mm, or 110 mm.

6. The pipe plug (1) according to any of the preceding claims, wherein the inflatable unit (2) is configured to withstand an outer liquid (water) pressure of up to 0.1 bar, more preferably up to 0.2 bar, even more preferably up to 0.3 bar, yet more preferably up to 0.5 bar, yet even more preferably up to 1 bar, most preferably up to 3 bar, when installed in a pipeline and inflated by means of the pump unit (9).

7. The pipe plug (1) according to any of the preceding claims, wherein the connecting member (6) comprises a first tube member, such as a hose.

8. The pipe plug (1) according to any of the preceding claims, further comprising a coupling (3), such as a rigid plastic coupling, for air-tightly connecting the inflatable unit (2) with the connecting member (6).

9. The pipe plug (1) according to claim 8, wherein the coupling (3) comprises a wide part (13) connected to the inflatable unit (2) and a narrow part (14) connected to the connecting member (6), and/or
wherein the coupling (3) is rounded, such as having circular or elliptical cross-sections in the parts connected to the inflatable unit (2) and the connecting member (6), and/or
wherein the coupling (3) comprises one or more indentations, such as rounded indentations, such as circular or elliptical indentation, in one or both of the parts connected to the inflatable unit (2) and the connecting member (6).

10. The pipe plug (1) according to claim 9, wherein the coupling (3) comprises one or more layers of elastomeric material, such as rubber, located in at least one of said indentations in one or both of the parts connected to the inflatable unit (2) and the connecting member (6).

11. The pipe plug (1) according to any of the preceding claims 8-10, wherein the coupling (3) comprises at least one attachment element (17), such as in the form of a hole (18), hook and/or eye, such as a screw eye, an eyebolt or an eye integrated as part of the coupling, configured for mounting a string for releasing the pipe plug (1) from the pipe after use.

12. The pipe plug (1) according to claim 11, wherein the string for attachment to the attachment element (17) is part of the pipe plug.

13. The pipe plug (1) according to any of the preceding claims 8-12, further comprising one or more clamps, such as cable ties, for securing the inflatable unit (2) to the coupling (3) and/or for securing the connecting member (6) to the coupling (3), the clamp(s) secured to the coupling in the indentation(s) such that the connection between coupling (3) and the inflatable unit (2) and connecting member (6) is airtight.

14. The pipe plug (1) according to any of the preceding claims, wherein the pipeline is a drain pipe.

15. The pipe plug (1) according to any of the preceding claims, wherein the pipeline is drainage pipe, such as an S-bended pipe, of a toilet such that the pipe plug is a toilet pipe plug.

## Patentansprüche

1. Rohrstopfen (1) zur Blockierung eines Flüssigkeitsdurchflusses in einer Rohrleitung, umfassend:
- eine mit Luft aufblasbare Einheit (2) zum Einsetzen in die Rohrleitung und so bemessen, dass sie eine Rohrleitung mit einem Durchmesser zwischen 20 mm und 150 mm blockiert;
- eine Pumpeneinheit (9), die zum Aufblasen der aufblasbaren Einheit (2) mit Luft konfiguriert ist, und
- ein Verbindungselement (6) zum Verbinden der aufblasbaren Einheit (2) und der Pumpeneinheit (9),
wobei der Rohrstopfen **dadurch gekennzeichnet ist, dass** er eine Druckerfassungseinheit (7) in Form eines kugelförmigen oder elliptischen, mit Luft aufblasbaren Pilotballons mit einem maximalen Durchmesser zwischen 8 mm und 20 mm umfasst, der konfiguriert ist, um eine qualitative Angabe des Innenluftdrucks in der aufblasbaren Einheit (2) bereitzustellen, und dadurch, dass die Pumpeneinheit (9) zum Aufblasen der Druckerfassungseinheit (7) mit Luft konfiguriert ist.

2. Rohrstopfen (1) nach Anspruch 1, wobei die Druckerfassungseinheit (7) direkt an dem Verbindungselement (6) befestigt ist oder
wobei die Druckerfassungseinheit (7) als eine begrenzte Länge des Verbindungselements (6) mit einem größeren Querschnittsdurchmesser als der Rest des Verbindungselements (6) ausgebildet ist.

3. Rohrstopfen (1) nach einem der vorstehenden Ansprüche, wobei die Druckerfassungseinheit (7) zwischen 1 cm und 20 cm von der Pumpeneinheit (9), wie etwa zwischen 2 cm und 10 cm, wie etwa zwischen 3 cm und 7 cm, wie etwa zwischen 4 cm und 6 cm, wie etwa 5 cm von der Pumpeneinheit (9) positioniert ist.

4. Rohrstopfen (1) nach einem der vorstehenden Ansprüche, wobei die Druckerfassungseinheit (7) aus Latex hergestellt ist.

5. Rohrstopfen (1) nach einem der vorstehenden Ansprüche, wobei die aufblasbare Einheit (2) einen Durchmesser zwischen 20 mm und 150 mm, wie etwa 32 mm, 40 mm, 50 mm, 75 mm oder 110 mm, aufweist.

6. Rohrstopfen (1) nach einem der vorstehenden Ansprüche, wobei die aufblasbare Einheit (2) so konfiguriert ist, dass sie einem äußeren Flüssigkeits-(Wasser-)Druck von bis zu 0,1 bar, bevorzugter bis zu 0,2 bar, noch bevorzugter bis zu 0,3 bar, noch bevorzugter bis zu 0,5 bar, noch bevorzugter bis zu 1 bar, am bevorzugtesten bis zu 3 bar standhält, wenn sie in eine Rohrleitung eingebaut und mittels der Pumpeinheit (9) aufgeblasen ist.

7. Rohrstopfen (1) nach einem der vorstehenden Ansprüche, wobei das Verbindungselement (6) ein erstes Rohrelement, wie etwa einen Schlauch, umfasst.

8. Rohrstopfen (1) nach einem der vorstehenden Ansprüche, ferner umfassend ein Anschlussstück (3), beispielsweise ein starres Anschlussstück aus Kunststoff, zum luftdichten Verbinden der aufblasbaren Einheit (2) mit dem Verbindungselement (6).

9. Rohrstopfen (1) nach Anspruch 8, wobei das Anschlussstück (3) einen breiten Teil (13), der mit der aufblasbaren Einheit (2) verbunden ist, und einen schmalen Teil (14), der mit dem Verbindungselement (6) verbunden ist, umfasst und/oder wobei das Anschlussstück (3) abgerundet ist, wie etwa kreisförmige oder elliptische Querschnitte in den Teilen aufweist, die mit der aufblasbaren Einheit (2) und dem Verbindungselement (6) verbunden sind, und/oder wobei das Anschlussstück (3) eine oder mehrere Vertiefungen, wie etwa abgerundete Vertiefungen, wie etwa kreisförmige oder elliptische Vertiefungen, in einem oder beiden der Teile umfasst, die mit der aufblasbaren Einheit (2) und dem Verbindungselement (6) verbunden sind.

10. Rohrstopfen (1) nach Anspruch 9, wobei das Anschlussstück (3) eine oder mehrere Schichten aus elastomerem Material, wie etwa Gummi, umfasst, die sich in mindestens einer der Vertiefungen in einem oder beiden der Teile befinden, die mit der aufblasbaren Einheit (2) und dem Verbindungselement (6) verbunden sind.

11. Rohrstopfen (1) nach einem der vorstehenden Ansprüche 8-10, wobei das Anschlussstück (3) mindestens ein Befestigungselement (17), wie etwa in Form eines Lochs (18), Hakens und/oder einer Öse, wie etwa eine Schrauböse, eine Ringschraube oder eine als Teil des Anschlussstücks integrierte Öse, umfasst, die zum Montieren einer Schnur zum Lösen des Rohrstopfens (1) aus dem Rohr nach Gebrauch konfiguriert ist.

12. Rohrstopfen (1) nach Anspruch 11, wobei die Schnur zur Befestigung an dem Befestigungselement (17) Teil des Rohrstopfens ist.

13. Rohrstopfen (1) nach einem der vorstehenden Ansprüche 8-12, ferner umfassend eine oder mehrere Klemmen, wie etwa Kabelbinder, zum Sichern der aufblasbaren Einheit (2) an dem Anschlussstück (3) und/oder zum Sichern des Verbindungselements (6) an dem Anschlussstück (3), wobei die Klemme (n) an dem Anschlussstück in der/den Vertiefung(en) gesichert ist/sind, sodass die Verbindung zwischen Anschlussstück (3) und aufblasbarer Einheit (2) und Verbindungselement (6) luftdicht ist.

14. Rohrstopfen (1) nach einem der vorstehenden Ansprüche, wobei die Rohrleitung ein Abflussrohr ist.

15. Rohrstopfen (1) nach einem der vorstehenden Ansprüche, wobei die Rohrleitung ein Drainagerohr, wie etwa ein in S-Form gebogenes Rohr, einer Toilette ist, sodass der Rohrstopfen ein Toilettenrohrstopfen ist.

## Revendications

1. Bouchon de tuyau (1) pour bloquer un écoulement de liquide dans une canalisation, comprenant :
- une unité gonflable à l'air (2) destinée à être insérée dans la canalisation et dimensionnée pour bloquer une canalisation ayant un diamètre compris entre 20 mm et 150 mm ;
- une unité de pompe (9) configurée pour gonfler l'unité gonflable (2) avec de l'air, et
- un élément de connexion (6) pour connecter l'unité gonflable (2) et l'unité de pompe (9)
le bouchon de tuyau étant **caractérisé en ce qu'**il comprend une unité de détection de pression (7), sous la forme d'un ballon pilote gonflable à l'air sphérique ou elliptique ayant un diamètre maximal compris entre 8 mm et 20 mm, configuré pour fournir une indication qualitative de la pression d'air interne dans l'unité gonflable (2), et **en ce que** l'unité de pompe (9) est configurée pour gonfler l'unité de détection de pression (7) avec de l'air.

2. Bouchon de tuyau (1) selon la revendication 1, dans lequel l'unité de détection de pression (7) est fixée directement à l'élément de connexion (6), ou
dans lequel l'unité de détection de pression (7) est formée en tant que longueur limitée de l'élément de connexion (6) ayant un diamètre en coupe transversale plus grand que le reste de l'élément de connexion (6).

3. Bouchon de tuyau (1) selon l'une quelconque des revendications précédentes, dans lequel l'unité de détection de pression (7) est positionnée entre 1 cm et 20 cm de l'unité de pompe (9), tel qu'entre 2 cm et 10 cm, tel qu'entre 3 cm et 7 cm, tel qu'entre 4 cm et 6 cm, tel qu'à 5 cm de l'unité de pompe (9).

4. Bouchon de tuyau (1) selon l'une quelconque des revendications précédentes, dans lequel l'unité de détection de pression (7) est en latex.

5. Bouchon de tuyau (1) selon l'une quelconque des revendications précédentes,
dans lequel l'unité gonflable (2) a un diamètre compris entre 20 mm et 150 mm, tel que 32 mm, 40 mm, 50 mm, 75 mm ou 110 mm.

6. Bouchon de tuyau (1) selon l'une quelconque des revendications précédentes, dans lequel l'unité gonflable (2) est configurée pour résister à une pression de liquide externe (eau) allant jusqu'à 0,1 bar, plus préférablement jusqu'à 0,2 bar, encore plus préférablement jusqu'à 0,3 bar, de manière davantage préférée jusqu'à 0,5 bar, plus préférablement encore jusqu'à 1 bar, le plus préférablement jusqu'à 3 bar, lorsqu'il est installé dans une canalisation et gonflé au moyen de l'unité de pompe (9).

7. Bouchon de tuyau (1) selon l'une quelconque des revendications précédentes, dans lequel l'élément de connexion (6) comprend un premier élément de tube, tel qu'un tuyau.

8. Bouchon de tuyau (1) selon l'une quelconque des revendications précédentes, comprenant en outre un raccord (3), tel qu'un raccord en plastique rigide, pour connecter de manière étanche à l'air l'unité gonflable (2) avec l'élément de connexion (6).

9. Bouchon de tuyau (1) selon la revendication 8, dans lequel le raccord (3) comprend une partie large (13) connectée à l'unité gonflable (2) et une partie étroite (14) connectée à l'élément de connexion (6), et/ou
dans lequel le raccord (3) est arrondi, tel qu'il a des sections transversales circulaires ou elliptiques dans les parties connectées à l'unité gonflable (2) et à l'élément de connexion (6), et/ou
dans lequel le raccord (3) comprend une ou plusieurs indentations, telles que des indentations arrondies, telles qu'une indentation circulaire ou elliptique, dans une ou les deux parties connectées à l'unité gonflable (2) et à l'élément de connexion (6).

10. Bouchon de tuyau (1) selon la revendication 9, dans lequel le raccord (3) comprend une ou plusieurs couches de matériau élastomère, tel que du caoutchouc, situées dans au moins une desdites indentations dans l'une ou les deux parties connectées à l'unité gonflable (2) et l'élément de connexion (6).

11. Bouchon de tuyau (1) selon l'une quelconque des revendications précédentes 8 à 10, dans lequel le couplage (3) comprend au moins un élément de fixation (17), tel que sous la forme d'un trou (18), d'un crochet et/ou d'un oeil, tel qu'un œil de vis, un boulon à œil ou un œil intégré en tant que partie du raccord, configuré pour monter un cordon pour libérer le bouchon de tuyau (1) du tuyau après utilisation.

12. Bouchon de tuyau (1) selon la revendication 11, dans lequel le cordon de fixation à l'élément de fixation (17) fait partie du bouchon de tuyau.

13. Bouchon de tuyau (1) selon l'une quelconque des revendications précédentes 8 à 12, comprenant en outre une ou plusieurs pinces, telles que des serre-câbles, pour fixer l'unité gonflable (2) au raccord (3) et/ou pour fixer l'élément de connexion (6) au raccord (3), la ou les pinces étant fixées au raccord dans la ou les indentations de sorte que la connexion entre le raccord (3) et l'unité gonflable (2) et l'élément de connexion (6) est hermétique.

14. Bouchon de tuyau (1) selon l'une quelconque des revendications précédentes, dans lequel la canalisation est un tuyau de drainage.

15. Bouchon de tuyau (1) selon l'une quelconque des revendications précédentes, dans lequel la canalisation est un tuyau de drainage, tel qu'un tuyau en S, d'une toilette de sorte que le bouchon de tuyau est un bouchon de tuyau de toilette.
